# EUROPEAN PATENT SPECIFICATION

(11) **EP 1 307 067 B1**
(45) Date of publication and mention of the grant of the patent: **04.10.2006**
(21) Application number: 02024050.3
(22) Date of filing: 28.10.2002
(51) Int. Cl.: H04Q 7/38

(54) **Wireless communication system to support real time services and handoff method thereof**
Drahtloses Kommunikationssystem für Echtzeitdiensten und zugehörendes Weiterreichungsverfahren
Système de communication sans fil fournissant des services en temps réel et procédé de transfert d'appel associé

(30) Priority: 26.10.2001 KR 2001066476
(43) Date of publication of application: 02.05.2003
(73) Proprietor: SAMSUNG ELECTRONICS CO., LTD., Suwon-City, Kyungki-do (KR)
(72) Inventor: Shin, Dong-yun, Seosan-City, Choongchungnam-do (KR); Chang, Ki-soo, Paldal-gu, Suwon-city, Gyunggi-do (KR)
(74) Representative: Grünecker, Kinkeldey, Stockmair & Schwanhäusser Anwaltssozietät

(56) References cited:
- EP-A- 0 345 601
- HESHAM SOLIMAN ET AL: "Hierarchical Mobile IPv6 and Fast Handoffs" INTERNET, 28 June 2000 (2000-06-28), XP002179511 Retrieved from the Internet: <URL:www.ietf.org> [retrieved on 2001-10-08]
- CHIRUVOLU C ET AL: "Mobility and QoS support for IPv6-based Real.time Wireless Internet Traffic" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, vol. 1, 6 June 1999 (1999-06-06), pages 334-338, XP002145404 ISBN: 0-7803-5285-8
- PERKINS C E ET AL: "Optimized smooth handoffs in Mobile IP" COMPUTERS AND COMMUNICATIONS, 1999. PROCEEDINGS. IEEE INTERNATIONAL SYMPOSIUM ON RED SEA, EGYPT 6-8 JULY 1999, LOS ALAMITOS, CA, USA,IEEE COMPUT. SOC, US, 6 July 1999 (1999-07-06), pages 340-346, XP010555054 ISBN: 0-7695-0250-4
- KARIM EL MALKI ET AL: "Hierarchical Mobile IPv4/v6 and Fast Handoffs: draft-elmalki-soliman-hmipv4v6-00.txt" INTERNET ENGINEERING TASK FORCE INTERNET DRAFT, XX, XX, 10 March 2000 (2000-03-10), pages 1-24, XP002234532

## Description

This invention relates to a wireless communication system to support real time service and a handoff method thereof, and more particularly to a wireless communication system to support real time service and a handoff method thereof using Resource Reservation Protocol (RSVP) in a mobile Internet Protocol environment.

Recently, due to the rapid spread of mobile communication and the Internet, wireless Internet service, and, furthermore, high quality wireless Internet service, such as that in a wire network are required. As a result, a lot of services, such as Multicast service and real time service, that are used in a wire environment are provided in a wireless environment. Therefore, study of real time service such as Video Conference, Video on Demand (VOD), Interactive TV, and Voice over Internet Phone (VoIP) is continuously in progress.

The standard of mobile Internet Protocol (IP) for offering real time service in a wireless environment was suggested in 1996 by the Internet Engineering Task Force (IETF). However, the suggested mobile IP standard has many limitations and problems in supporting substantial real time service, including ineffective transmission path by triangle routing, cancellation of a higher rank protocol by frequent registration information renewals by a mobile host, transmission delay of a datagram and increase of blocking probability by handoff, and difficulty in transmission path set up by encapsulation and tunneling.

In order to support mobility of a mobile host and secure continuous real time service, the prompt renewal of registration information and the priority of a real time service transmission path should be guaranteed when a handoff occurs. In the suggested mobile IP standard, all datagrams always pass through a home agent (HA), and, therefore, a path message of a resource reservation protocol cannot be sent to the mobile host that is moved. Even though the path message is sent to the mobile host using the method of tunneling, still there is a problem that the path for real time service should always include a home agent.

The above resource reservation method is called triangle routing and is discussed in "IP Mobility Supports" by Perkins published in IETF RFC 2002, October 1996, "Path Optimization in Mobile IP" by Johnson and Perkins published in IETF Mobile-IP Working Draft 5th edition, November 1996, and "Locality-based Path Optimization in Mobile IP" by Kang-il Lee et al. published in 4th international mobile multimedia communication workshop proceedings (September~ October 1997).

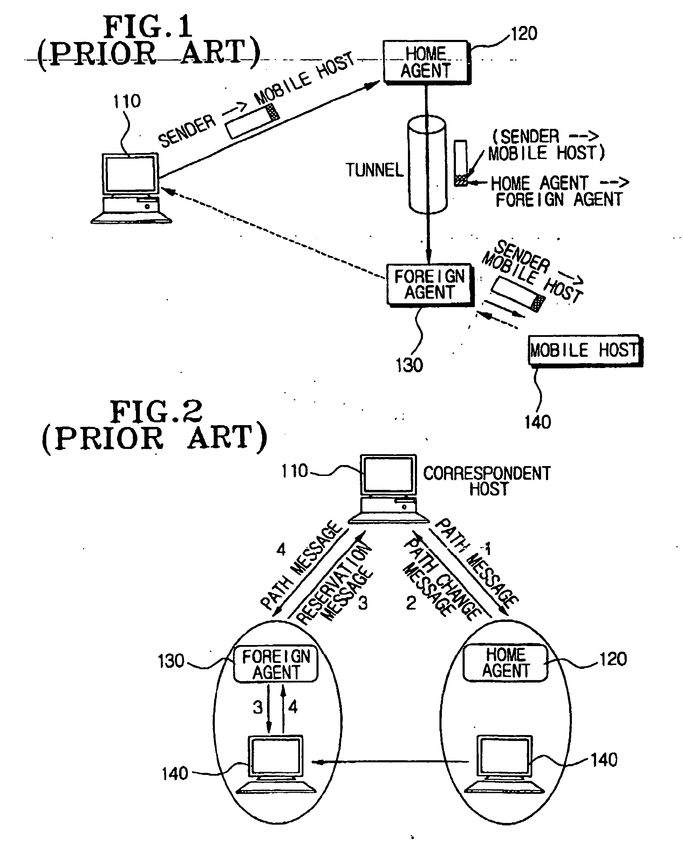

FIG. 1 shows a datagram transmission process of mobile IP by conventional triangle routing. Referring to FIG. 1, a mobile host 140 requests registration of its own IP address by searching for a foreign agent 130 when it is located outside of an area covered by the home agent 120. The foreign agent 130 that received a request for registration sends a message requesting registration of the mobile host 140 to the home agent 120. Through the process of registration and renewal of registration information between the mobile host 140, the foreign agent 130, and the home agent 120, the home agent 120 can identify the exact location of the mobile host 140, no matter where the mobile host 140 moves.

After the location of the mobile host 140 is registered in the home agent 120, all datagrams sent from a correspondent host 110 to the mobile host 140 are encapsulated in the home agent 120 and sent through the tunnel formed by the foreign agent 130. By decapsulation, the foreign agent 130 that received the encapsulated datagram sends the datagram which has an IP header used for tunneling to the mobile host 140. The foreign agent 130 operates as a Care-of-Address for tunneling. According to FIG. 1, as path set up of the mobile host 140 is always done through the home agent 120, if the mobile host becomes distant from the home network, it will cause more delay in the renewal of registration information by triangle routing.

A scheme for overcoming this problem is presented in the theses titled "Implementing Resource Reservation for Mobile Hosts in the Internet Using RSVP and Mobile IP" by Chua K. C. et al. and "Mobility Management in IP Networks Providing Real-time Service" by Palemo et al., both published in 2000.

The method presented in these theses, which uses a path change message, is that when the mobile host moves into the foreign network, the home agent sends a path change message about the path message received from the correspondent host and the correspondent host again sends the path message to the foreign agent of the foreign network into which the mobile host has moved. However, this method does not include a clear solution for providing continuous real time service when the mobile host moves from one foreign agent to another foreign agent, in other words, when a handoff occurs between the foreign agents.

FIG. 2 shows a process for implementing resource reservation protocol using a path change message in the mobile IP environment. When the correspondent host 110 sends a path message to the mobile host 140, the home agent 120 sends the changed information on location of the mobile host 140 via a path change message to the correspondent host 110. The correspondent host, which received a path change message, sends the path change message again to the foreign agent 130 to where the mobile host is moved. The mobile host 140 can have a transmission path for real time service between the correspondent host 110, the foreign agent 130, and the mobile host 140 secured by sending a reservation message through the foreign agent 130.

However, this method does not have a clear solution in case the mobile host 140 moves to another foreign agent. In other words, if a handoff occurs as the mobile host moves into an external network, a new path set up process has to be done from the start. At this point, all data being transferred are blocked from the existing foreign agent and cause a problem of increasing the traffic of the node and the link.

Meanwhile, RSVP for supporting real time service in a wire network has a lot of limitations and problems for applying wireless data communication in a mobile IP environment. If the mobile host is moved from the home network in which it is already registered and registered in an external network, it cannot receive a path message sent from the correspondent host, and, therefore, cannot send a reservation message for real time service. As a result, resource reservation protocol of the wire network cannot support the mobility of the mobile host. Accordingly, in order to support the mobility of the mobile host and secure continuous real time service, RSVP structure that is suitable for the wireless network and able to adapt itself in case of a handoff is necessary.

As explained referring to FIG. 1, the path message of RSVP cannot be sent to the mobile host in the conventional triangle routing method as all datagrams always pass through the home agent. Even if the path message is transferred to the mobile host using the tunneling method, substantial real time service cannot be possible, because the real time service path always includes the foreign agent and the home agent.

Also, when the mobile host is moved to another foreign agent, that is, when a handoff occurs between the foreign agents, there is no clear solution for continuous real time service in the method using a path change message explained referring to FIG. 2. That is to say, with this method the registered network cannot secure the mobility of a continuously changing wireless environment. Therefore, a structure suitable for a handoff scheme in a mobile IP environment should be added to the existing RSVP.

FIG. 3 shows an object class structure of the conventional path change message. Referring to FIG. 3, the object class of the conventional path change message includes the addresses of the home agent and the Care-of-Address. However, the path change message does not have information for providing continuous real time service when the mobile host moves to another foreign agent. Therefore, if a handoff occurs as the mobile host moves into an external network, a new path set up process has to be done from the start.

Hesham Soliman et al is a publication on hierarchical mobile IPv6 and fast handoffs. This document describes extension for MIPv6 and neighbor discovery to allow for the introduction of a hierarchical MIPv6 mobility management model. Furthermore, this document describes that the MN (mobile node) will perform regional registrations with any new MAP (mobility anchor point) from which it receives the MAP option. However, the MN should not release existing bindings until it no longer receives advertisements from the AR that include its current MAP address in one of the MAP options. When one of the MAPs being used disappears from the route advertisement, the MN must inform all CNs using that address to use another MAP's address on the MN's actual COA (care of address) Moreover, this document discloses that the introduction of the MAP concept minimizes the latency due to hand-offs between access routers. Furthermore, the addition of a bicasting to an MAP allows for fast hand-offs which will minimize the packet losses due to hand-offs and consequently improve the throughput of best effort services and performance of real time data services over the radio interface.

EP-17-0 345 601 discloses a mobile communication system which has multiple base stations wherein each of these base stations define a miniature service zone. The base stations are communicating with mobile stations present in the service zone over a radio link. Geographically associated base stations are spaced apart from each other by an area in which the mobile stations are not responsive to electromagnetic waves on their radial links, whereby the base stations are allowed to share the same frequency for the electromagnetic waves. The base stations are accommodated in an on-road vehicle communications network which switches communications to the base station.

The present invention has been made to overcome the above identified problem.

Accordingly, it is an object of the present invention to provide an improved wireless communication system and a method which is capable of providing a real time service under a mobile IP environment that can prevent data transmission delay and occurrence of blocking phenomenon due to hand-off.

This object is solved by the present invention and in particular by the subject matter of the independent claims. Preferred embodiments are subject matter of the dependent claims.

The above object is accomplished by a wireless communication system for real time service according to the present invention, including multiple mobile management means for forming each a network comprised of multiple visitor management means and managing mobile information of a mobile communication device; member management means for receiving the mobile information from the mobile management means and managing location renewal status of the mobile communication device; and information provision means for producing a datagram provided to the mobile communication device according to the mobile information of the mobile communication device,

The visitor management means forms a respective separate sub-network and provides a real time service path for providing the datagram to the mobile communication device, and at least one of the visitor management means is the common visitor management means included in the networks formed each by one of the multiple mobile management means.

The mobile management means renews the mobile information and provides the real time service path between the information provision means and the mobile communication device when the mobile communication device moves to the sub-network formed by the other visitor management means within a network formed by the same mobile management means.

The mobile management means, forming a network comprising the sub-network in which the mobile communication device is located, sends a reservation message to the information provision means when a path message is received from the information provision means and provides the real time service path between the information means and the mobile communication device.

The visitor management means, in which the mobile communication device is located, sends a change message to the mobile management means forming the network comprising the sub-network in which the mobile communication device is located and changes the mobile information.

When the mobile communication device is located in the sub-network forming the common visitor management means, the common visitor management means requests registration of the mobile communication device to the other mobile management means which does not manage the mobile information of the mobile communication device and reserves a real time service path.

The mobile management means in which the mobile communication device is located, sends a path change message to the information provision means and transmits information about the mobile management means forming the network comprising the sub-network where the mobile communication device will be moved to; the mobile management means, where the mobile communication device will be moved to, receives a path message of the mobile communication device from the information provision means, sends a reservation message to the information provision means, and secures a real time service path; and the member management means renews registration of the location of the mobile communication device.

The common visitor management means transmits an information request message to close mobile management means having said visitor management means in common and the mobile management means which manages the mobile information of the mobile communication device corresponding to the information request message transmits an information response message to the common visitor management means, transmits a path change message to the information provision means, and receives a path message from the information provision means.

The above aspect is also accomplished by a wireless communication method for real time service, comprising the steps of: receiving a path message from an information provision means by a mobile management means in which a mobile communication device is located; identifying a visitor management means managing mobile information of the mobile communication device by the mobile management means in which the mobile communication device is located; and requesting registration of the mobile communication device to a mobile management means where the mobile communication device will be moved to and which is close to the mobile management means in which the mobile communication device is located by the common visitor management means when the visitor management means is the common visitor management means located in multiple mobile management means.

The multiple mobile management means form a network comprised of the multiple visitor management means and manages mobile information of the mobile communication device.

The visitor management means forms a respective sub-network of the network formed by the corresponding mobile management means and provides a real time service path in order to supply a datagram to the mobile communication device.

In a non-limiting, exemplary embodiment of the present invention, the registration request step comprises the steps of: sending a path change message to the information provision means providing a datagram by the mobile management means in which the mobile communication device is located; sending the path message to the mobile management means by the information provision means, the mobile communication device being moved to the mobile management means; and sending a reservation message to the information provision means by the mobile management means to where the mobile communication device is to be moved.

In another non-limiting, exemplary embodiment of the present invention, the registration request step comprises the steps of: sending an information request message to the mobile management means in which the mobile communication device is located and to the close mobile management means by the common visitor management means; sending an information response message to the common visitor management means by the mobile management means which manages the mobile information of the mobile communication device corresponding to the information request message; and sending a path change message to the information provision means and receiving the path change message from the information provision means.

The path change message comprises addresses of the mobile communication device, the common visitor management means in which the mobile communication device is located, the mobile management means in which the mobile communication device is located, and the mobile management means corresponding to the information request message.

In the case that the visitor management means including the mobile information of the mobile communication device is not the common visitor management means, the mobile management means in which the mobile communication device is located sends a reservation message to the information provision means when a path message is received from the information provision means and provides a real time service path to the information provision means and the mobile communication device.

In the case that the visitor management means including the mobile information of the mobile communication device is not the common visitor management means, the visitor management means in which- the-mobile communication device is located sends a change message to the mobile management means and requests the mobile management means that a path be changed to the visitor management means.

The change message comprises addresses of the visitor management means to be moved to and the mobile communication device.

Accordingly, the real time services are supported in the mobile IP environment, while the possibility of having datagram transmission delay and blocking phenomenon due to handoff is decreased. Also, repeated renewals of registration information via the home agent according to the movement of the moving host are prevented, as a plurality of foreign agents construct one cluster and one cluster agent represents the cluster. Furthermore, by positioning an overlapped agent shared by the clusters, a path of the next cluster is established in advance, and accordingly, problems like communication cut-off during the handoff between the clusters can be improved.

The aforementioned object and characteristics of the present invention will be more apparent by describing a preferred embodiment of the present invention in greater detail with reference to accompanied drawings, in which:

FIG. 1 is a view showing a process of transmitting a mobile IP datagram by using a conventional triangle routing;

FIG. 2 is a view showing a process of establishing an RSVP by using a path change message under the conventional mobile IP environment;

FIG. 3 is a view showing an object class structure of the-conventional path change message;

FIG. 4 is a view showing the structure of a wireless communication system for real time service according to the preferred embodiment of the present invention;

FIG. 5 is a view showing the structure of the datagram transmitted from a correspondent host to the home agent and the structure of a datagram encapsulated in the home agent;

FIG. 6 is a view showing a general handoff process according to the present invention;

FIG. 7 is a view showing a local handoff process according to the present invention;

FIG. 8 is a view showing the structure of information request/response message being transmitted from an overlapped foreign agent to a cluster agent;

FIG. 9 is a view showing the structure of the path change message being transmitted from the cluster agent to the correspondent host;

FIG. 10 is a view showing the structure of the path change message being transmitted from the foreign agent to the cluster agent;

FIG. 11A is a flowchart of the handoff method for the wireless communication system according to the present invention;

FIG. 11B is a flowchart of the general handoff method for the wireless communication system according to the present invention;

FIG. 11C is a flowchart of the local handoff method for the wireless communication system according to the present invention;

FIG. 12 is a view showing the real time service providing process during the handoff in the foreign agents performing the conventional routing function;

FIG. 13 is a view showing the real time service providing process during the handoff in the foreign agents performing the function of the cluster agent;

FIG. 14 is a view showing the real time service providing process during the handoff in the clusters, with some of the foreign agents performing the function of the cluster agent and no overlapped foreign agent available; and

FIG. 15 is a view showing the real time service providing process during the handoff in the clusters, with both the cluster agent and the overlapped foreign agent available.

Hereinafter, a preferred embodiment of the present invention will be described in greater detail with reference to the accompanying drawings.

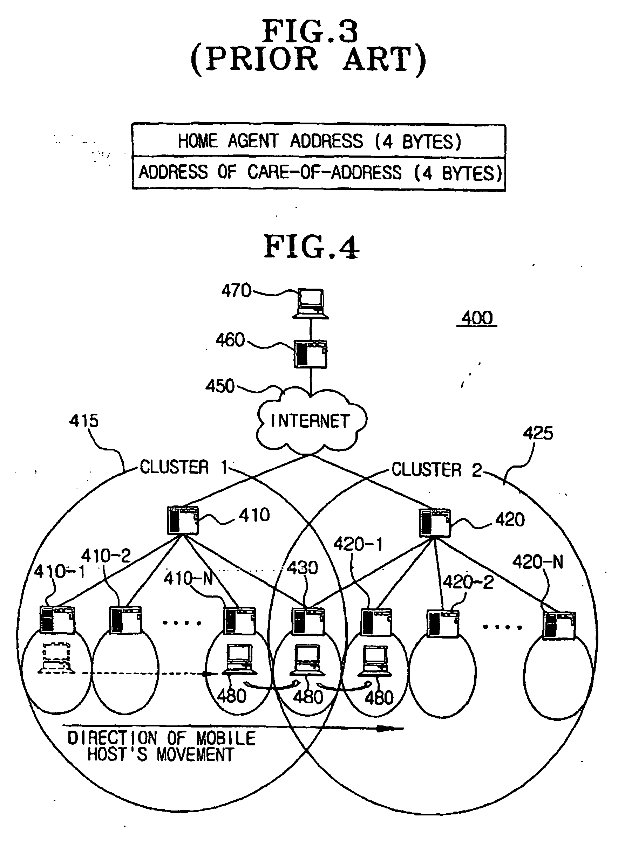

FIG. 4 is a view showing the structure of a wireless communication system for providing real time services according to one preferred embodiment of the present invention.

Referring to FIG. 4, the wireless communication system 400 for providing real time services according to the present invention includes a plurality of cluster agents (CA) 410, 420, a plurality of foreign agents (FA) 410-1~410-n, 420-1~420-n, an overlapped agent (OA) 430, a home agent (HA) 460, and a correspondent host (CH) 470.

The cluster agents CAs 410, 420 construct independent networks like a cluster1 415 and a cluster2 425. Each cluster agent CAs 410, 420 has a plurality of foreign agents FAs 410-1~410-n, 420-1~420-n that constitute an independent sub-network. The overlapped agent OA 430 is a foreign agent that is shared by the cluster1 415 and the cluster2 425.

The CAs 410, 420 are connected to the HA 460 via the Internet 450. The HA 460 is connected with the CH 470. Mobile hosts (MH), like mobile phone, PDA, etc., are provided with the datagram from the CH 470 via the FAs 410-1~410-n, 420-1~420-n, 430 that manage the sub-network where the MH is located in.

The CH 470 identifies the location of the MH 480 by transmitting the path message to the MH 480. The CH 470 also sends the datagram for transmission to the MH 480 to the HA 460.

The HA 460 provides the CH 470 with the location information of the MH 480, encapsulates the datagram transmitted from the CH 470, and transmits the encapsulated datagram to the FAs 410-1~410-n, 420-1~420-n, 430 where the MH 480 is located.

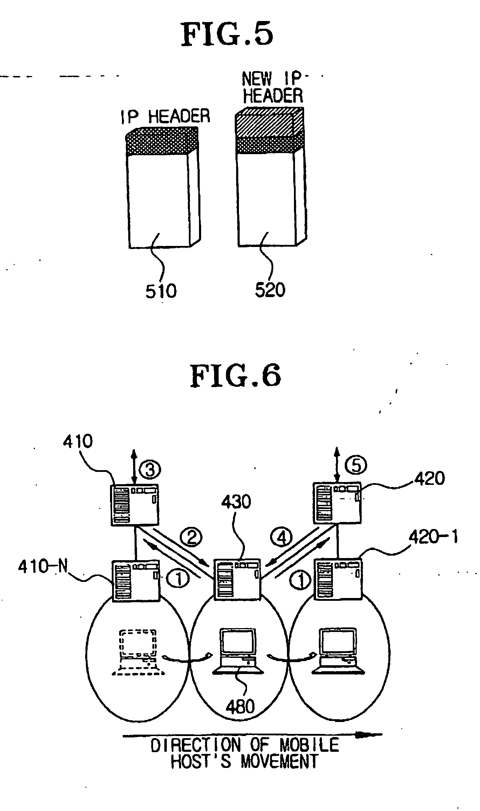

FIG. 5 shows the structure of the datagram being transmitted from the CH 470 to the HA 460, and the structure of the datagram encapsulated in the HA 460. Referring to FIG. 5, the datagram 510, which is transmitted from the CH 470 to the HA 460, has an IP header and a payload. The datagram 520, which is encapsulated in the HA 460, has a foreign header and a foreign payload. The foreign payload includes a pre-encapsulation IP header and payload.

The CA1 410 or CA2 420 operates as a Care-of-Address (COA) on behalf of all the FAs 410-1~410-n, 420-1~420-n, 430 that exist in the lower rank and represents one cluster. The CA1 410 or CA2 420 also manages the mobility information of the MH 480, i.e., the information about the CA1 410 or CA2 420 where the MH 480 exists, and the information of the FA (one of 410-1~410-n, 420-1~420-n, 430). The CA1 410 or CA2 420 serves the function of a terminal endpoint of the tunneling of all the lower rank FAs 410-1~410-n, 420-1~420-n, 430.

A general handoff occurs between the CAs 410, 420. The general handoff accompanies a renewal of the HA registration information. During the general handoff, the COA is changed from the CA1 410, where the MH 480 is located, to the CA2 420, to where the MH 480 is going to move. For the registration of MH 480, a relatively long period of time is required to renew the registration information through a series of processes at the HA 460, CA1 410 and MH 480.

The OA 430 is the FA shared by the CAs 410, 420. Accordingly, when the MH 480 enters from the FAn 410-n of the CA1 410 to where the OA belongs, the OA 430 registers the MH 480 in the other CA (CA2)-where the OA 430 also belongs, prior to the general handoff.

Meanwhile, if the MH 480 moves within the same CA, like within the CA1 410 or CA2 420, from a certain sub-network to another sub-network that is managed by other FAs 410-1~410-n or 420-1~420-n, a local handoff occurs. In other words, the local handoff occurs within the same cluster. In the case of local handoff, the registration information of the HA 460 is not renewed, but the location of the MH 480 is registered by means of renewal of location information of the CA1 410 or CA2 420. The local handoff has a short registration path between the MH 480 and the CA1 410 or CA2 420.

The FAs 410-1~410-n, 420-1~420-n, 430 constitute independent sub-networks, and provide the real time service path for providing the MH 480 with the datagram received from the CH 470.

In the network structure of the wireless communication system 400 as described above, the CA1 410 and the CA2 420 for mobility management are positioned in the clusters 1 and 2, respectively. Each of CA1 410 and CA2 420 operates as a COA of all the MH 480 that are registered in the network managed by the CA1 410 or CA2 420. The CA1 410 manages all FAs of the sub-network, i.e., the FA1 410-1, FA2 410-2, ···, FAn 410-n, and OA 430. The CA2 420 manages all FAs of the sub-network, i.e., the FA1 420-1, FA2 420-2, ···, FAn 420-n, and OA 430.

The general handoff during the moving of the MH 480 from one cluster to another cluster will be described in greater detail below.

FIG. 6 shows the general handoff process according to the present invention. As the MH 480 moves from the cluster 415 of the CA1 410 to the cluster 415 of the CA2 420, the MH 480 moves from the FAn 410-n to the FA1 420-1 via the OA 430.

When the MH 480 enters the OA 430 region, first, in order to obtain RSVP path information, the OA 430 sends an information request message to a neighboring CA inclusive of the CA1 410 and the CA2 420 (process ①). The CA1 410, which has the corresponding path for the information request message, responds with an information reply message, while the other CAs disregard the information request message (process ②).

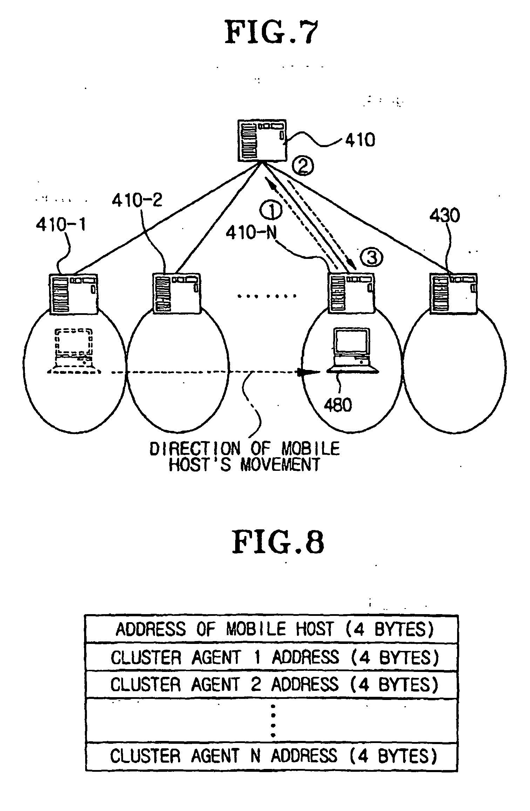

FIG. 8 shows the structure of the information request/reply message being transmitted by the OA 430. The information request/reply message is formed of address of MH 480, address of CA1 410, address of CA2 420, ···, address of CAn. The addresses take 4 bytes, respectively.

When the MH 480 moves from the cluster1 415 to the cluster2 425, the COA is also changed from the CA1 410 to the CA2 420. Accordingly, the location registration of the MH 480 with respect to the HA 460 is renewed, and the CA1 410, which received the information request message, reports the mobility information of the MH 480 corresponding to the CA2 420. The reporting of the mobility information is carried out as the CA1 410 reports the path change message to the CH 470 (process ③) and the MH 480 reports the information of the CA2 420.

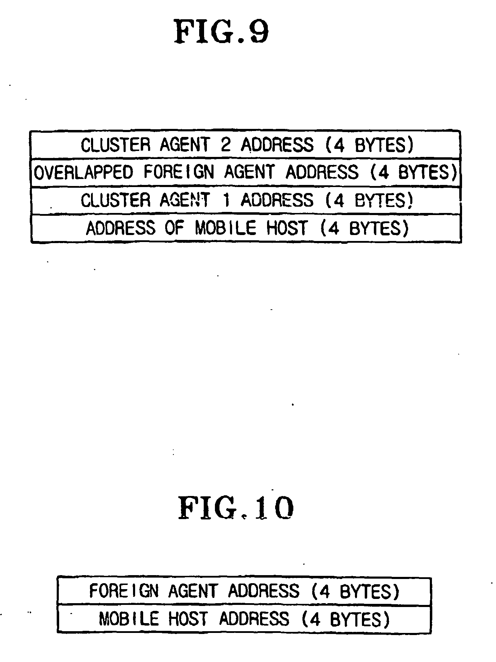

FIG. 9 shows the structure of the path change message being transmitted from the CA to the CH. The path change message includes the address of the CA2 420, the address of the OA 430, the address of the CA1 410, and the address of the MH 480. The addresses take 4 bytes, respectively.

The CA2 420, which received the information request message, receives the path message of the corresponding MH 480 from the CH 470 (process ④) of FIG 6, and reports the reservation message to the CH 470, to thereby ensure the path for real time services by the MH 480 (process ⑤). The OA 430, positioned in between the clusters, is registered in the neighboring cluster agent as a guest prior to the general handoff, to reserve a real time service path.

During the real time service path renewal, the MH 480 receives the continuous real time service while maintaining the path of the CA1 410. When the path is renewed by the process ⑤ of FIG. 6, the path of the CA1 410 is released, while the real time services are provided through the path of the CA2 420.

The location handoff when the MH 480 moves to the another FA within the same cluster will be described in greater detail below.

FIG. 7 shows the local handoff process according to the present invention. The local handoff occurs as the MH 480 moves within the cluster 415 of the CA1 410, from the FA1 410-1 to the FAn 410-n. The mobility of the MH 480, which moves in the same cluster, is taken care of by the cluster agent (CA1 in FIG. 7) that manages the corresponding cluster. Accordingly, all path messages transmitted from the CH 470 are transmitted to the CA1 410.

The MH 480, moved to the FAn 410-n, requests through the FAn 410-n that the CA1 410 change the path to the FAn 410-n. At this time, the FAn 410-n transmits the change message to the CA1 410. The structure of the change message is shown in FIG. 10. The change message includes the address (4 bytes) of the FA and the address (4 bytes) of the MH.

The CA1 410 changes the value of the FA that matches the MH 480 in the guest registration list, and transmits the renewal of the registration information to the MH 480 through the FAn 410-n. Also, the CA1 410 transmits the reservation message of the path message to the CH 470, to thereby ensure the path between the CH 470 and the MH 480.

Since the location renewal path by the handoff is not carried out via the HA 460, it takes a relatively short time. As described above, the local handoff process is not a process of registration via the HA 460, and accordingly, the value of the COA is not changed, and there is no need for the HA 460 and the CH 470 to obtain the information about the changed path.

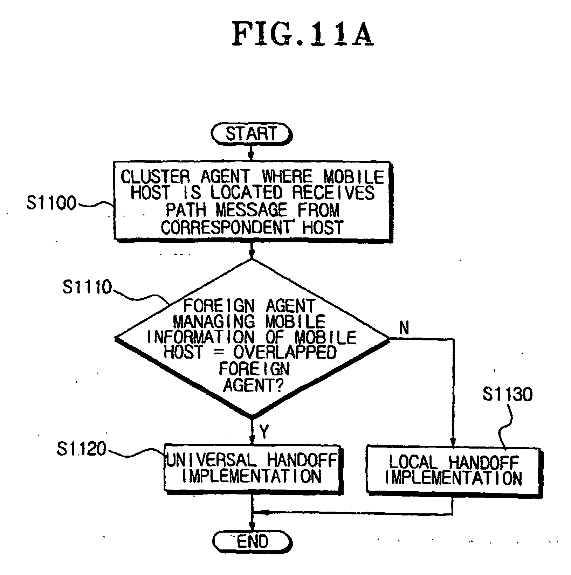

FIG. 11A shows the process of a handoff method in the wireless communication system according to the present invention.

Referring to FIG. 11A, the CA1 410 or CA2 420, where the MH 480 is located, receives the path message from the CH 470 (step S1100). The CA1 410 or CA2 420 that received the path message, checks the FAs 410-1~410-n, 420-1~420-n, and 430 that take care of the mobility information of the MH 480 (step S1110). If it is determined that the OA 430 is taking care of the mobility information of the MH 480, a general handoff is carried out (step S1120). However, if it is determined that the FAs 410-1~410-n or 420-1~420-n within the same cluster take care of the mobility information of the MH 480, a local handoff is carried out (step S1130).

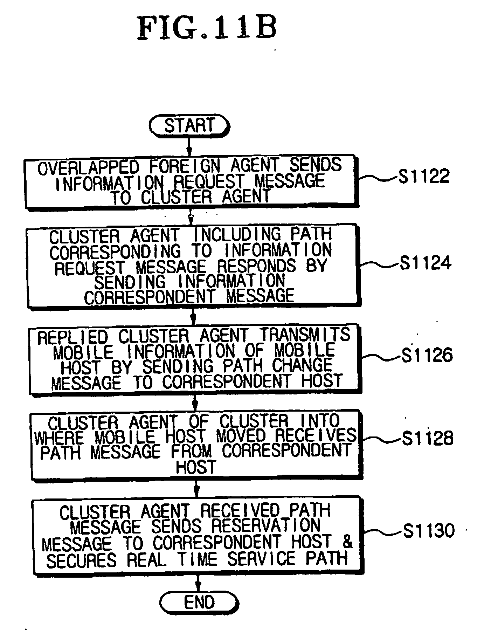

FIG.11B is a flowchart showing the general handoff process carried out in the wireless communication system according to the present invention.

Referring to FIG. 11B, when the MH 480 enters the OA 430 region, first, in order to obtain the RSVP path information, the OA 430 transmits the information request message to the neighboring cluster agent inclusive of the CA1 410 and the CA2 420 (step S1122). Then, the CA1 410, which has the corresponding path for the information request message, responds with the information reply message (step S1124), while the other CAs disregard the information request message.

The CA1 410, which received the information request message, reports the mobility information of the MH 480 corresponding to the CA2 420 (step S1126). The reporting of the mobility information is carried out as the CA1 410 reports to the CH 470 of the path change message and the MH 480 reports the information about the CA2 420 where the MH 480 has moved.

The CA2 420 receives the path message of the corresponding MH 480 from the CH 470 (step S1128). The CA2 420 also reports to the CH 470 of the reservation message, to thereby ensure the path for real time services by the MH 480 (step S1130). During the general handoff, the OA 430, positioned in between the clusters, is -registered-inthe neighboring cluster agent as a guest, prior to the general handoff to thereby reserve a real time service path.

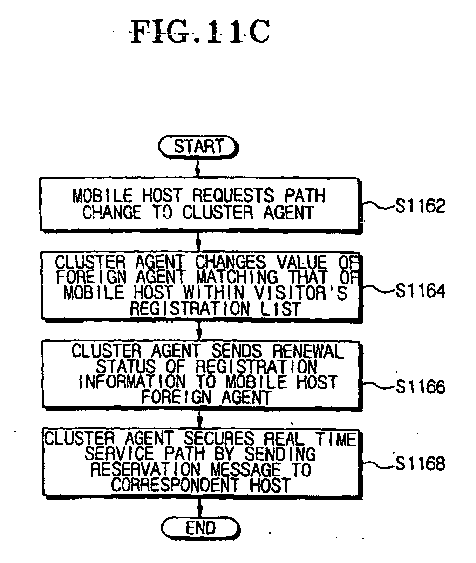

FIG. 11C is a flowchart showing the local handoff process carried out in the wireless communication system according to the present invention.

Referring to FIG. 11C, through the FAn 410-n, the MH 480 requests the CA1 410, where the MH 480 is located, to change the path to the FAn 410-n (step S1162). The path change request is made as the FAn 410-n transmits the change message to the CA1 410. The CA1 410 changes the value of the FA that corresponds to the MH 480 in the guest registration list (step S1164). Through the FAn 410-n, the CA1 410 also transmits the renewal of the registered information to the MH 480 (step S1166). The CA1 410 transmits the reservation message to the CH 470, to thereby ensure the path for real time services between the CH 470 and the MH 480 (step S1168).

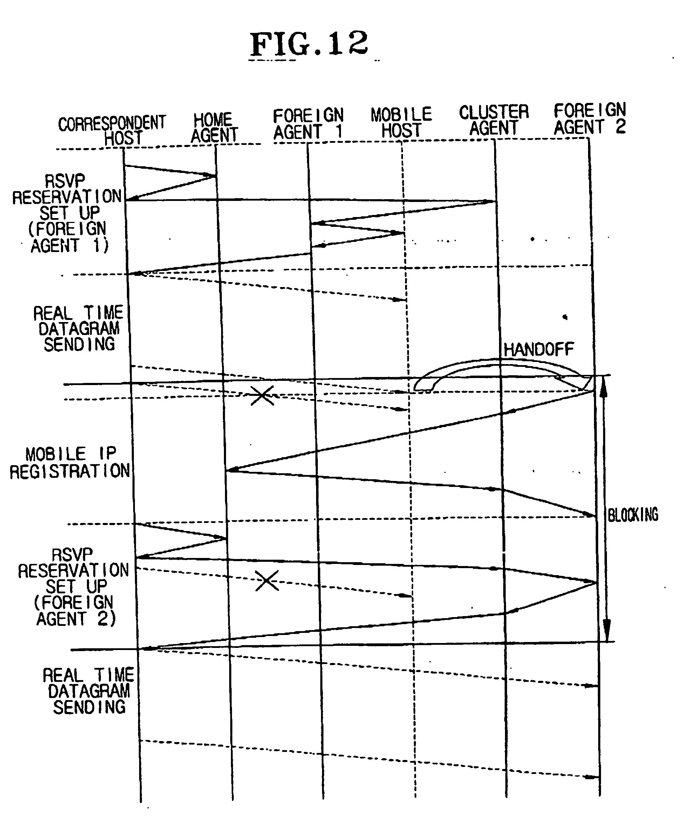

FIG. 12 is a view showing the process of providing the real time services when the handoff occurs between the FAs that perform the conventional triangle routing function. Referring to FIG. 12, during the datagram transmission through the FA1, if the MH 480 moves to the FA2 region, the IP registration process is carried out. Here, since the resource reservation setting process between the MH 480 and the FA2 is carried out from the start, and since the process has to be carried out via the HA 460, a blocking occurs for a long time.

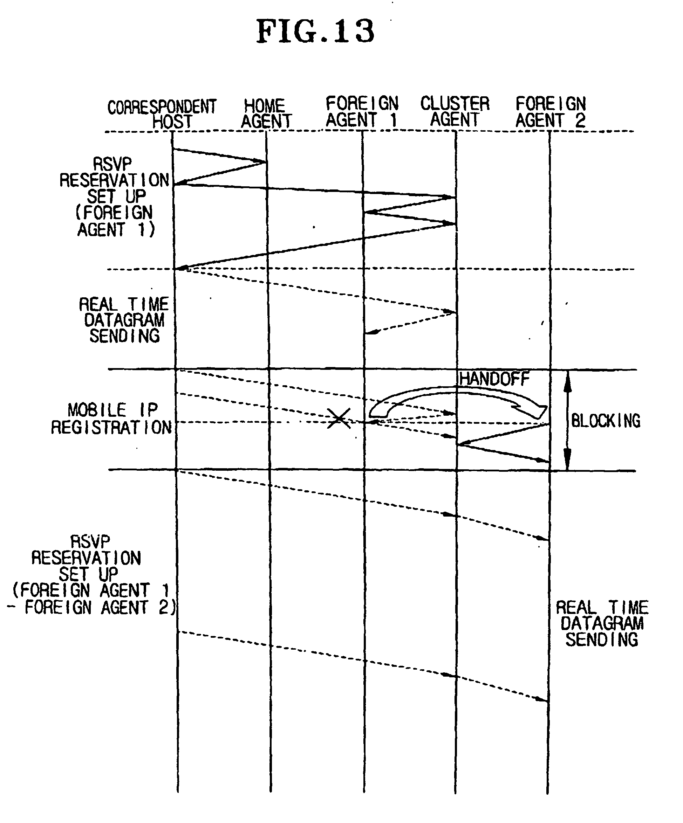

FIG. 13 shows the process of providing the rear time services when the handoff occurs between the FA of the same cluster, with some of the FA performing the function of cluster agent. Referring to FIG. 13, during the real time datagram transmission through the FA1, if the MH 480 moves to the FA2 region, a mobility IP registration process is carried out. Since the mobility IP registration process is carried out through the cluster agent, and not via the HA 460, the blocking occurs only in the process of mobility IP registration. Meanwhile, since the resource reservation setting process is carried out between the FA1 and FA2, the blocking does not occur during the resource reservation process.

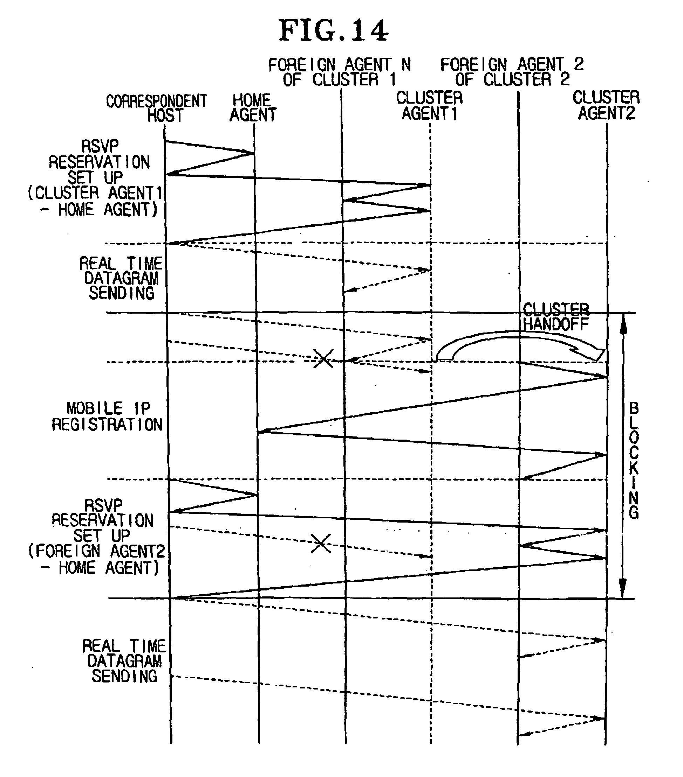

FIG. 14 shows the process of providing the real time services when the handoff occurs between the clusters, with some FAs performing the function of cluster agent, but with no OA available. Referring to FIG. 14, when the handoff occurs among the FAs within the same CA, since the process does not have to be carried out via the HA, the cluster handoff is carried out in the same way as described with reference to FIG. 13. Accordingly, the blocking occurs only during the mobility IP registration process and during the resource reservation setting process that is carried out by the CAs and the HA.

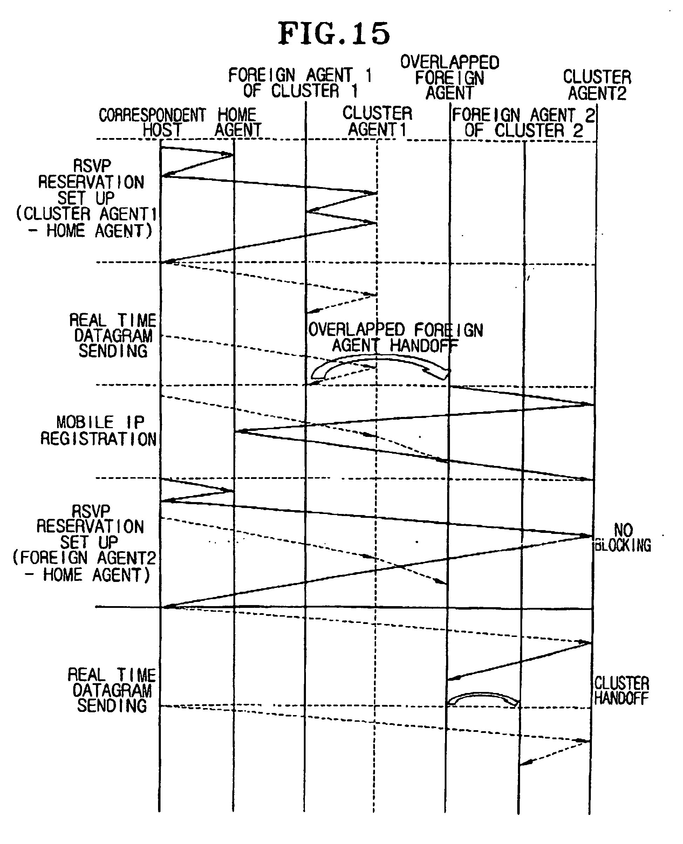

FIG. 15 shows the process of providing the real time service when the handoff occurs between the clusters, with all the CAs and the OA available. Referring to FIG. 15, when the handoff occurs between the CAs, the COA is also changed prior to the handoff via the FA. Accordingly, the blocking does not occur only during the resource reservation setting process that is carried out by the CAs and the HA.

As described above, the wireless communication system for providing real time services and the handoff method according to the present invention can overcome the problems of the conventional technology in relation to the handoff. According to the present invention, a network is constructed in a cluster basis for path reservation and handoff support, while an overlapped foreign agent is placed approximately at a boundary between the clusters. According to the present invention, also, a plurality of foreign agents are defined in one cluster, and the handoff among the foreign agents of the same cluster has a short path renewal by the local handoff, while the handoff between the clusters has a relatively longer path renewal by the general handoff.

With the wireless communication system for real time services and the handoff method according to the present invention, by constructing one cluster with a plurality of foreign agents, and having one cluster agent that represents the cluster, unnecessarily repeated registration information renewals can be prevented. According to the present invention, problems like communication cut-off during the handoff can also be improved, since an overlapped foreign agent is positioned between the clusters and a path of the next cluster is established in advance during the handoff.

Especially, the wireless communication system for real time service and the handoff method according to the present invention is very effective for the mobile communication data transmission environment, in which handoff occurs often due to fast movement, and for the real time service with respect to a moving mobile host. Furthermore, by adding the information request/reply message, path change message and change message to the messages of the RSVP Protocol, the handoff, which occurs during the real time service provision in the mobile IP environment, can be effectively performed.

## Claims

1. A wireless communication system (400) for real time service, comprising:
first mobile management means (410) for forming a first network (415) comprised of multiple visitor management means (410-1 to 410-N, 430) and managing mobile information of a mobile communication device (480);
second mobile management means (420) for forming a second network (425) comprised of multiple visitor management means (420-1 to 420-N, 430) and managing mobile information of the mobile communication device (480) the second mobile management means (420) being close to the first mobile management means (410) and the second network (425) being the network where the mobile communication device (480) is to be moved to;
member management means (460) for receiving the mobile information from the first and second mobile management means and managing location renewal status of the mobile communication device; and
information provision means (470) for producing a datagram provided to the mobile communication device according to the mobile information of the mobile communication device,
wherein each of the multiple visitor management means is adapted to form a respective separate sub-network and to provide a real time service path for providing the datagram to the mobile communication device,
**characterized in that**
at least one of the visitor management means is a common visitor management means (430) included in the first and second network, and
wherein, when the mobile communication device is located in the sub-network formed by the common visitor management means, the common visitor management means is adapted to request registration of the mobile communication device to the second mobile management means (420) which does not manage the mobile information of the mobile communication device through the first mobile management means (410), which is adapted to transmit a path change message to the information provision means (470), and to reserve a real time service path, and wherein the information provision means (470) is adapted to transmit a path message to the second mobile management means (420), which is adapted to secure the real time service path.

2. The wireless communication system (400) for real time service as claimed in claim 1, wherein the first mobile management means (410) is adapted to renew the mobile information and to provide the real time service path between the information provision means (470) and the mobile communication device (480) when the mobile communication device (480) moves to a sub-network comprised in the first network (415).

3. The wireless communication system (400) for real time service as claimed in claim 2, wherein the first mobile management means (410), related to the sub-network in which the mobile communication device (480) is located, is adapted to send a reservation message to the information provision means (470) when a path message is received from the information provision means and to provide the real time service path between the information means and the mobile communication device.

4. The wireless communication system (400) for real time service as claimed in claim 2, wherein the visitor management means (410-1 to 410-N, 430), forming the sub-network in which the mobile communication device (480) is located, is adapted to send a change message to the first mobile management means (410) related to the sub-network in which the mobile communication device (480) is located, and to change the mobile information.

5. The wireless communication system (400) for real time service as claimed in claims 1 to 4, wherein the first mobile management means (410) related to the sub-network in which the mobile communication device (480) is located, is adapted to send a path change message to the information provision means (470) and to transmit information about the second mobile management means (420) related to the sub-network where the mobile communication device will be moved to;
wherein the second mobile management means (420), where the mobile communication device (480) will be moved to, is adapted to receive a path message of the mobile communication device (480) from the information provision means, to send a reservation message to the information provision means (470); and
wherein the member management means (460) is adapted to renew registration of location of the mobile communication device.

6. The wireless communication system (400) for real time service as claimed in claims 1 to 4, wherein the common visitor management means (430), forming the sub-network in which the mobile communication device (480) is located, is adapted to transmit an information request message to the first and second mobile management means; and
wherein the first mobile management means (410), related to the sub-network of the common visitor management means (430), is adapted to transmit an information response message to the common visitor management means (430).

7. A wireless communication method for real time service, comprising the steps of:
receiving a path message from an information provision means (470) by a first mobile management means (410) in which a mobile communication device (480) is located, the first mobile management means (410) forming a first network (415);
identifying visitor management means (410-1 to 410-N, 420-1 to 420-N, 430) managing mobile information of the mobile communication device by the first mobile management means (410) in which the mobile communication device (480) is located; and
securing a real time service path by a second mobile management means (420) the second mobile management means being close to the first mobile management means (410) and forming a second network (425) being the network where the mobile communication device (480) is to be moved to,
**characterized by**
requesting registration of the mobile communication device (480) by a common visitor management means (430) through the first mobile management means (410) to the second mobile management means (420), which does not manage the mobile information of the mobile communication device (480), when the visitor management means is the common visitor management means (430) located in the first and secondnetwork, thereby transmitting a path change message from the first mobile management means (410) to the information provision means (470) and transmitting a path message from information provision means (470) to the second mobile management means (420) in order to secure the real time service path.

8. The wireless communication method for real time service as claimed in claim 7, wherein the first network (415) is comprised of multiple visitor management means (410-1 to 410-N) and the first mobile management means (410) manages mobile information of the mobile communication device.

9. The wireless communication method for real time service as claimed in claim 7 and 8, wherein each of the visitor management means (410-1 to 410-N, 420-1 to 420-N, 430) forms a respective sub-network and provides a real time service path in order to supply a datagram to the mobile communication device.

10. The wireless communication method for real time service as claimed in claims 7 to 9, wherein the registration request step comprises the steps of:
sending a path change message to the information provision means (470) providing a datagram via the first mobile management means (410); and
sending a reservation message to the information provision means (470) by the second mobile management means.

11. The wireless communication method for real time service as claimed in claims 7 to 10, wherein the registration request step comprises the steps of:
sending an information request message to the first mobile management means (410) and to the second mobile management means (420) by the common visitor management means (430);
sending an information response message to the common visitor management means (430) by the first mobile management means which manages the mobile information of the mobile communication device (480).

12. The wireless communication method for real time service as claimed in claim 11, wherein the information request message comprises an address of the mobile communication device (480) and the second mobile management means (420).

13. The wireless communication method for real time service as claimed in claim 11, wherein the path change message comprises addresses of the mobile communication device (480), the common visitor management means (430) in which the mobile communication device (430) is located, the first mobile management means (410), and neighboring mobile management means to which the information request message has been sent, wherein neighboring mobile management means are mobile management means arranged next the first mobile management means (410).

14. The wireless communication method for real time service as claimed in claim 7, wherein, in the case that the visitor management means including the mobile information of the mobile communication device is not the common visitor management means, the first mobile management means (410) in which the mobile communication device is located sends a reservation message to the information provision means (470) when a path message is received from the information provision means and provides a real time service path to the information provision means (470) and the mobile communication device (480).

15. The wireless communication method for real time service as claimed in claim 7, wherein, in the case that the visitor management means including the mobile information of the mobile communication device (480) is not the common visitor management means, the visitor management means in which the mobile communication device (480) is located sends a change message to the first mobile management means (410) and requests the first mobile management means that a path is changed to visitor management means where the mobile communication device (480) is to be moved to.

16. The wireless communication method for real time service as claimed in claim 15, wherein the change message comprises addresses of the mobile communication device and the visitor management means where the mobile communication device (480) is to be moved to.

## Patentansprüche

1. Drahtlos-Kommunikationssystem (400) für Echtzeitdienst, das umfasst:
eine erste Mobil-Verwaltungseinrichtung (410) zum Ausbilden eines ersten Netzwerks (415), die aus mehreren Gast-Verwaltungseinrichtungen (410-1 bis 410-N, 430) besteht und Mobil-Informationen einer Mobil-Kommunikationsvorrichtung (480) verwaltet;
eine zweite Mobil-Verwaltungseinrichtung (420) zum Ausbilden eines zweiten Netzwerks (425), die aus mehreren Gast-Verwaltungseinrichtungen (420-1 bis 420-N, 430), besteht und Mobil-Informationen der Mobil-Kommunikationsvorrichtung (480) verwaltet, wobei die zweite Mobil-Verwaltungseinrichtung (420) nahe an der ersten Mobil-Verwaltungseinrichtung (410) liegt und das zweite Netzwerk (425) das Netzwerk ist, zu dem die Mobil-Kommunikationsvorrichtung (480) bewegt werden soll;
eine Mitglied-Verwaltungseinrichtung (460) zum Empfangen der Mobil-Information von der ersten und der zweiten Mobil-Verwaltungseinrichtung und zum Verwalten des Standorterneuerungsstatus der Mobil-Kommunikationsvorrichtung;
eine Informationsbereitstellungseinrichtung (470) zum Erzeugen eines Datagramms, das der Mobil-Kommunikationsvorrichtung bereitgestellt wird, entsprechend den Mobil-Informationen der Mobil-Kommunikationsvorrichtung,
wobei jede der mehreren Gast-Verwaltungseinrichtungen so eingerichtet ist, dass sie ein jeweiliges separates Teil-Netzwerk ausbildet und einen Echtzeitdienstpfad zum Bereitstellen des Datagramms für die Mobil-Kommunikationsvorrichtung bereitstellt,
**dadurch gekennzeichnet, dass**
wenigstens eine der Gast-Verwaltungseinrichtungen eine gemeinsame Gast-Verwaltungseinrichtung (430) ist, die in dem ersten und dem zweiten Netzwerk enthalten ist, und
wobei, wenn sich die Mobil-Kommunikationsvorrichtung in dem Teil-Netzwerk befindet, das durch die gemeinsame Gast-Verwaltungseinrichtung ausgebildet wird, die gemeinsame Gast-Verwaltungseinrichtung so eingerichtet ist, dass sie Registrierung der Mobil-Kommunikationsvorrichtung bei der zweiten Mobil-Verwaltungseinrichtung (420), die die Mobil-Informationen der Mobil-Kommunikationsvorrichtung nicht verwaltet, über die erste Mobil-Verwaltungseinrichtung (410) anfordert, die so eingerichtet ist, dass sie eine Pfad-Änderungsmitteilung zu der informationsbereitstellungseinrichtung (470) sendet und einen Echtzeitdienst-Pfad reserviert, und wobei die Informationsbereitstellungseinrichtung (470) so eingerichtet ist, dass sie eine Pfad-Mitteilung zu der zweiten Mobil-Verwaltungseinrichtung (420) sendet, die so eingerichtet ist, dass sie den Echtzeitdienst-Pfad sichert.

2. Drahtlos-Kommunikationssystem (400) für Echtzeitdienst nach Anspruch 1, wobei die erste Mobil-Verwaltungseinrichtung (410) so eingerichtet ist, dass sie die Mobil-Informationen erneuert und den Echtzeitdienst-Pfad zwischen der Informationsbereitstellungseinrichtung (470) und der Mobil-Kommunikationsvorrichtung (480) bereitstellt, wenn sich die Mobil-Kommunikationsvorrichtung (480) zu einem Teil-Netzwerk bewegt, das in dem ersten Netzwerk (415) enthalten ist.

3. Drahtlos-Kommunikationssystem (400) für Echtzeitdienst nach Anspruch 2 wobei die erste Mobil-Verwaltungseinrichtung (410), die mit dem Teil-Netzwerk zusammenhängt, in dem sich die Mobil-Kommunikationsvorrichtung (480) befindet, so eingerichtet ist, dass sie eine Reservierungs-Mitteilung zu der Informationsbereitstellungseinrichtung (470) sendet, wenn eine Pfad-Mitteilung von der Informationsbereitstellungseinrichtung empfangen wird, und den Echtzeitdienst-Pfad zwischen der Informationseinrichtung und der Mobil-Kommunikationsvorrichtung bereitstellt.

4. Drahtlos-Kommunikationssystem (400) für Echtzeitdienst nach Anspruch 2, wobei die Gast-Verwaltungseinrichtung (410-1 bis 410-N, 430), die das Teil-Netzwerk ausbildet, in dem sich die Mobil-Kommunikationsvorrichtung (480) befindet, so eingerichtet ist, dass sie eine Änderungs-Mitteilung zu der ersten Mobil-Verwaltungseinrichtung (410) sendet, die mit dem Teil-Netzwerk zusammenhängt, in dem sich die Mobil-Kommunikationsvorrichtung (480) befindet, und die Mobil-informationen ändert.

5. Drahtlos-Kommunikationssystem (400) für Echtzeitdienst nach den Ansprüchen 1 bis 4, wobei die erste Mobil-Verwaltungseinrichtung (410), die mit dem Teil-Netzwerk zusammenhängt, in dem sich die Mobil-Kommunikationsvorrichtung (480) befindet, so eingerichtet ist, dass sie eine Pfad-Änderungsmitteilung zu der Informationsbereitstellungseinrichtung (470) sendet, und Information über die zweite Mobil-Verwaltungseinrichtung (420) sendet, die mit dem Teil-Netzwerk zusammenhängt, zu dem die Mobil-Kommunikationsvorrichtung bewegt werden soll;
wobei die die zweite Mobil-Verwaltungseinrichtung (420), zu der die Mobil-Kommunikationsvorrichtung bewegt werden soll, so eingerichtet ist, dass sie eine Pfad-Mitteilung der Mobil-Kommunikationsvorrichtung (480) von der Informationsbereitstellungseinrichtung empfängt, und eine Reservierungs-Mitteilung an die Informationsbereitstellungseinrichtung (470) sendet; und
wobei die Mitglied-Verwaltungseinrichtung (460) so eingerichtet ist, dass sie Registrierung des Standorts der Mobil-Kommunikationsvorrichtung erneuert.

6. Drahtlos-Kommunikationssystem (400) für Echtzeitdienst nach den Ansprüchen 1 bis 4, wobei die gemeinsame Gast-Verwaltungseinrichtung (430), die das Teil-Netzwerk ausbildet, in dem sich die Mobil-Kommunikationsvorrichtung (480) befindet, so eingerichtet ist, dass sie eine Informationsanforderungs-Mitteilung zu der ersten und der zweiten Mobil-Verwaltungseinrichtung sendet; und
wobei die erste Mobil-Verwaltungseinrichtung (410), die mit dem Teil-Netzwerk der gemeinsamen Gast-Verwaltungseinrichtung (430) zusammenhängt, so eingerichtet ist, dass sie eine Informationsantwort-Mitteilung zu der gemeinsamen Gast-Verwaltungseinrichtung (430) sendet.

7. Drahtlos-Kommunikationsverfahren für Echtzeitdienst, das die folgenden Schritte umfasst:
Empfangen einer Pfad-Mitteilung von einer Informationsbereitstellungseinrichtung (470) durch eine erste Mobil-Verwaltungseinrichtung (410), in der sich eine Mobil-Kommunikationsvorrichtung (480) befindet, wobei die erste Mobil-Verwaltungseinrichtung (410) ein erstes Netzwerk (415) ausbildet;
Identifizieren von Gast-Verwaltungseinrichtungen (410-1 bis 410-N, 420-1 bis 420-N, 430), die Mobil-Informationen der Mobil-Kommunikationsvorrichtung verwalten, durch die erste Mobil-Verwaltungseinrichtung (410), in der sich die Mobil-Kommunikationsvorrichtung (480) befindet; und
Sichern eines Echtzeitdienst-Pfades durch eine zweite Mobil-Verwaltungseinrichtung (420), wobei die zweite Mobil-Verwaltungseinrichtung nahe an der ersten Mobil-Verwaltungseinrichtung (410) liegt und ein zweites Netzwerk (425) ausbildet, das das Netzwerk ist, zu dem die Mobil-Kommunikationsvorrichtung (480) bewegt werden soll,
**gekennzeichnet durch**:
Anfordern von Registrierung der Mobil-Kommunikationsvorrichtung (480) bei der zweiten Mobil-Verwaltungseinrichtung (420), die die Mobil-Informationen der Mobil-Kommunikationsvorrichtung (480) nicht verwaltet, **durch** eine gemeinsame Gast-Verwaltungseinrichtung (430) über die erste Mobil-Verwaltungseinrichtung (410), wenn die Gast-Verwaltungseinrichtung die gemeinsame Gast-Verwaltungseinrichtung (430) ist, die sich in dem ersten und dem zweiten Netzwerk befindet, um so eine Pfad-Änderungs-Mitteilung von der ersten Mobil-Verwaltungseinrichtung (410) zu der Informationsbereitstellungseinrichtung (470) zu senden und eine Pfad-Mitteilung von der Informationsbereitstellungseinrichtung (470) zu der zweiten Mobil-Verwaltungseinrichtung (420) zu senden, um den Echtzeitdienst-Pfad zu sichern.

8. Drahtlos-Kommunikationsverfahren für Echtzeitdienst nach Anspruch 7, wobei das erste Netzwerk (415) aus mehreren Gast-Verwaltungseinrichtungen (410-1 bis 410-N) besteht und die erste Mobil-Verwaltungseinrichtung (410) Mobil-Informationen der Mobil-Kommunikationsvorrichtung verwaltet.

9. Drahtlos-Kommunikationsverfahren für Echtzeitdienst nach Anspruch 7 und 8, wobei jede der Gast-Verwaltungseinrichtungen (410-1 bis 410-N, 420-1 bis 420-N, 430) ein jeweiliges Teil-Netzwerk ausbildet und einen Echtzeitdienst-Pfad bereitstellt, um der Mobil-Kommunikationsvorrichtung ein Datagramm zuzuführen.

10. Drahtlos-Kommunikationsvertahren für Echtzeitdienst nach den Ansprüchen 7 bis 9, wobei der Schritt der Registrierungs-Anforderung die folgenden Schritte umfasst:
Senden einer Pfad-Änderungs-Mitteilung zu der Informationsbereitstellungseinrichtung (470), die ein Datagramm über die erste Mobil-Verwaltungseinrichtung (410) bereitstellt; und
Senden einer Reservierungs-Mitteilung zu der Informationsbereitstellungseinrichtung (470) durch die zweite Mobil-Verwaltungseinrichtung.

11. Drahtlos-Kommunikationsvertahren für Echtzeitdienst nach den Ansprüchen 7 bis 10, wobei der Schritt der Registrierungs-Anforderung die folgenden Schritte umfasst:
Senden einer Informationsanforderungs-Mitteilung zu der ersten Mobil-Verwaltungseinrichtung (410) und der zweiten Mobil-Verwaltungseinrichtung (420) durch die gemeinsame Gast-Verwaltungseinrichtung (430);
Senden einer Informationsantwort-Mitteilung zu der gemeinsamen Gast-Verwaltungseinrichtung (430) durch die erste Mobil-Verwaltungseinrichtung, die die Mobil-Informationen der Mobil-Kommunikationsvorrichtung (480) verwaltet.

12. Drahtlos-Kommunikationsverfahren für Echtzeitdienst nach Anspruch 11, wobei die Informationsanforderungs-Mitteilung eine Adresse der Mobil-Kommunikationsvorrichtung (480) und der zweiten Mobil-Verwaltungseinrichtung (420) umfasst.

13. Drahtlos-Kommunikationsverfahren für Echtzeitdienst nach Anspruch 11, wobei die Pfad-Änderungs-Mitteilung Adressen der Mobil-Kommunikationsvorrichtung (480), der gemeinsamen Gast-Verwaltungseinrichtung (430), in der sich die Mobil-Kommunikationsvorrichtung (480) befindet, der ersten Mobil-Verwaltungseinrichtung (410) und benachbarter Mobil-Verwaltungseinrichtungen umfasst, zu denen die Informationsanforderungs-Mitteilung geleitet worden ist, wobei benachbarte Mobil-Verwaltungseinrichtungen Mobil-Verwaltungseinrichtungen sind, die nahe der ersten Mobil-Verwaltungseinrichtung (410) angeordnet sind.

14. Drahtlos-Kommunikationsverfahren für Echtzeitdienst nach Anspruch 7, wobei, wenn die Gast-Verwaltungseinrichtung, die die Mobil-Informationen der Mobil-Kommunikationsvorrichtung enthält, nicht die gemeinsame Gast-Verwaltungseinrichtung ist, die erste Mobil-Verwaltungseinrichtung (410), in der sich die Mobil-Kommunikationsvorrichtung befindet, eine Reservierungs-Mitteilung zu der Informationsbereitstellungseinrichtung (470) sendet, wenn eine Pfad-Mitteilung von der Informationsbereitstellungseinrichtung empfangen wird, und der Informations-Bereitstellungseinrichtung (470) sowie der Mobil-Kommunikationsvorrichtung (480) einen Echtzeitdienst-Pfad bereitstellt.

15. Drahtlos-Kommunikationsverfahren für Echtzeitdienst nach Anspruch 7, wobei, wenn die Gast-Verwaltungseinrichtung, die die Mobil-Informationen der Mobil-Kommunikationsvorrichtung (480) enthält, nicht die gemeinsame Gast-Verwaltungseinrichtung ist, die Gast-Verwaltungseinrichtung, in der sich die Mobil-Kommunikationsvorrichtung (480) befindet, eine Änderungs-Mitteilung zu der ersten Mobil-Verwaltungseinrichtung (410) sendet, und die erste Mobil-Verwaltungseinrichtung auffordert, einen Pfad zu der Gast-Verwaltungseinrichtung zu ändern, zu der die Mobil-Kommunikationsvorrichtung (480) bewegt werden soll.

16. Drahtlos-Kommunikationsverfahren für Echtzeitdienst nach Anspruch 15, wobei die Änderungs-Mitteilung Adressen der Mobil-Kommunikationsvorrichtung und der Gast-Verwaltungseinrichtung umfasst, zu der die Mobil-Kommunikationsvorrichtung (480) bewegt werden soll.

## Revendications

1. Système de télécommunications sans fil (400) pour un service en temps réel, comprenant:
un premier moyen de gestion de mobiles (410) servant à former un premier réseau (415) composé de multiples moyens de gestion de visiteurs (410-1 à 410-N, 430) et à gérer une information de mobile d'un dispositif de télécommunications mobile (480);
un deuxième moyen de gestion de mobiles (420) servant à former un deuxième réseau (425) composé de multiples moyens de gestion de visiteurs (420-1 à 420-N, 430) et à gérer une information de mobile du dispositif de télécommunications mobile (480), le deuxième moyen de gestion de mobiles (420) étant proche du deuxième moyen de gestion de mobiles (410) et le deuxième réseau (425) étant le réseau vers lequel le dispositif de télécommunications mobile (480) va se déplacer;
un moyen de gestion de membres (460) servant à recevoir les informations de mobile provenant des premier et deuxième moyens de gestion de mobiles et à gérer un état de renouvellement de localisation du dispositif de télécommunications mobile; et
un moyen de fourniture d'information (470) pour produire un datagramme fourni au dispositif de télécommunications mobile d'après l'information de mobile du dispositif de télécommunications mobile,
dans lequel chacun des multiples moyens de gestion de visiteurs est adapté pour former un sous-réseau distinct respectif et fournir un trajet de service en temps réel permettant de fournir le datagramme au dispositif de télécommunications mobile,
**caractérisé en ce que**
au moins un des moyens de gestion de visiteurs est un moyen de gestion de visiteurs commun (430) inclus dans les premier et deuxième réseaux, et
dans lequel, quand le dispositif de télécommunications mobile est localisé dans le sous-réseau formé par le moyen de gestion de visiteurs commun, le moyen de gestion de visiteurs commun est adapté pour demander un enregistrement du dispositif de télécommunications mobile auprès du deuxième moyen de gestion de mobiles (420) qui ne gère pas l'information de mobile du dispositif de télécommunications mobile par l'intermédiaire du premier moyen de gestion de mobiles (410), qui est adapté pour transmettre un message de changement de trajet au moyen de fourniture d'information (470), et pour réserver un trajet de service en temps réel, et dans lequel le moyen de fourniture d'information (470) est adapté pour transmettre un message de trajet au deuxième moyen de gestion de mobiles (420), qui est adapté pour assurer le trajet de service en temps réel.

2. Système de télécommunications sans fil (400) pour un service en temps réel selon la revendication 1, dans lequel le premier moyen de gestion de mobiles (410) est adapté pour renouveler l'information de mobile et pour fournir le trajet de service en temps réel entre le moyen de fourniture d'information (470) et le dispositif de télécommunications mobile (480) lorsque le dispositif de télécommunications mobile (480) se déplace vers un sous-réseau inclus dans le premier réseau (415).

3. Système de télécommunications sans fil (400) pour un service en temps réel selon la revendication 2, dans lequel le premier moyen de gestion de mobiles (410), relatif au sous-réseau dans lequel le dispositif de télécommunications mobile (480) est localisé, est adapté pour envoyer un message de réservation au moyen de fourniture d'information (470) lorsqu'il reçoit un message de trajet du moyen de fourniture d'information et pour fournir le trajet de service en temps réel entre le moyen de fourniture d'information et le dispositif de télécommunications mobile.

4. Système de télécommunications sans fil (400) pour un service en temps réel selon la revendication 2, dans lequel le moyen de gestion de visiteurs (410-1 à 410-N, 430) qui forme le sous-réseau dans lequel le dispositif de télécommunications mobile (480) est localisé est adapté pour envoyer un message de changement au premier moyen de gestion de mobiles (410) relatif au sous-réseau dans lequel le dispositif de télécommunications mobile (480) est localisé, et pour changer l'information de mobile.

5. Système de télécommunications sans fil (400) pour un service en temps réel selon l'une quelconque des revendications 1 à 4, dans lequel le premier moyen de gestion de mobiles (410) relatif au sous-réseau dans lequel le dispositif de télécommunications mobile (480) est localisé est adapté pour envoyer un message de changement de trajet au moyen de fourniture d'information (470) et pour transmettre une information concernant le deuxième moyen de gestion de mobiles (420) relatif au sous-réseau vers lequel le dispositif de télécommunications mobile va se déplacer;
dans lequel le deuxième moyen de gestion de mobiles (420), vers lequel le dispositif de télécommunications mobile (480) va se déplacer, est adapté pour recevoir un message de trajet du dispositif de télécommunications mobile (480) provenant du moyen de fourniture d'information, afin d'envoyer un message de réservation au moyen de fourniture d'information (470); et
dans lequel le moyen de gestion de membres (460) est adapté pour renouveler l'enregistrement de localisation du dispositif de télécommunications mobile.

6. Système de télécommunications sans fil (400) pour un service en temps réel selon les revendications 1 à 4, dans lequel le moyen de gestion de visiteurs commun (430) qui forme le sous-réseau dans lequel le dispositif de télécommunications mobile (480) est localisé est adapté pour transmettre un message de demande d'information aux premier et deuxième moyens de gestion de mobiles; et
dans lequel le premier moyen de gestion de mobiles (410), relatif au sous-réseau du moyen de gestion de visiteurs commun (430), est adapté pour transmettre un message de réponse à la demande d'information au moyen de gestion de visiteurs commun (430).

7. Procédé de télécommunications sans fil pour un service en temps réel, comprenant les étapes consistant à:
recevoir un message de trajet provenant d'un moyen de fourniture d'information (470) par un premier moyen de gestion de mobiles (410) dans lequel un dispositif de télécommunications mobile (480) est localisé, le premier moyen de gestion de mobiles (410) formant un premier réseau (415);
identifier un moyen de gestion de visiteurs (410-1 à 410-N, 420-1 à 420-N, 430) qui gère une information de mobile du dispositif de télécommunications mobile par le premier moyen de gestion de mobiles (410) dans lequel le dispositif de télécommunications mobile (480) est localisé; et
assurer un trajet de service en temps réel par un deuxième moyen de gestion de mobiles (420), le deuxième moyen de gestion de mobiles étant proche du premier moyen de gestion de mobiles (410) et formant un deuxième réseau (425) qui est le réseau vers lequel le dispositif de télécommunications mobile (480) va se déplacer;
**caractérisé par** l'étape consistant à:
demander un enregistrement du dispositif de télécommunications mobile (480) par un moyen de gestion de visiteurs commun (430) par l'intermédiaire du premier moyen de gestion de mobiles (410) auprès du deuxième moyen de gestion de mobiles (420), qui ne gère pas l'information de mobile du dispositif de télécommunications mobile (480), lorsque le moyen de gestion de visiteurs est le moyen de gestion de visiteurs commun (430) inclus dans les premier et deuxième réseaux, pour transmettre de ce fait un message de changement de trajet du premier moyen de gestion de mobiles (410) au moyen de fourniture d'information (470) et transmettre un message de trajet du moyen de fourniture d'information (470) au deuxième moyen de gestion de mobiles (420) dans le but d'assurer le trajet de service en temps réel.

8. Procédé de télécommunications sans fil pour un servie en temps réel selon la revendication 7, dans lequel le premier réseau (415) est composé de multiples moyens de gestion de visiteurs (410-1 à 410-N) et le premier moyen de gestion de mobiles (410) gère une information de mobile du dispositif de télécommunications mobile.

9. Procédé de télécommunications sans fil pour un service en temps réel selon les revendications 7 et 8, dans lequel chacun des moyens de gestion de visiteurs (410-1 à 410-N, 420-1 à 420-N, 430) forme un sous-réseau respectif et fournit un trajet de service en temps réel dans le but de fournir un datagramme au dispositif de télécommunications mobile.

10. Procédé de télécommunications sans fil pour un service en temps réel selon les revendications 7 à 9, dans lequel l'étape de demande d'enregistrement comprend les étapes consistant à:
envoyer un message de changement de trajet au moyen de fourniture d'information (470) fournissant un datagramme via le premier moyen de gestion de mobiles (410); et
envoyer un message de réservation au moyen de fourniture d'information (470) par le deuxième moyen de gestion de mobiles.

11. Procédé de télécommunications sans fil pour un service en temps réel selon les revendications 7 à 10, dans lequel l'étape de demande d'enregistrement comprend les étapes consistant à:
envoyer un message de demande d'information au premier moyen de gestion de mobiles (410) et au deuxième moyen de gestion de mobiles (420) par le moyen de gestion de visiteurs commun (430);
envoyer un message de réponse à la demande d'information au moyen de gestion de visiteurs commun (430) par le premier moyen de gestion de mobiles qui gère l'information de mobile du dispositif de télécommunications mobile (480).

12. Procédé de télécommunications sans fil pour un service en temps réel selon la revendication 11, dans lequel le message de demande d'information comprend des adresses du dispositif de télécommunications mobile (480) et du deuxième moyen de gestion de mobiles (420).

13. Procédé de télécommunications sans fil pour un service en temps réel selon la revendication 11, dans lequel le message de changement de trajet comprend des adresses du dispositif de télécommunications mobile (480), du moyen de gestion de visiteurs commun (430) dans lequel le dispositif de télécommunications mobile (430) est localisé, du premier moyen de gestion de mobiles (410) et de moyens de gestion de mobiles voisins auxquels le message de demande d'information a été envoyé, dans lequel les moyens de gestion de mobiles voisins sont des moyens de gestion de mobiles agencés à proximité du premier moyen de gestion de mobiles (410).

14. Procédé de télécommunications sans fil pour un service en temps réel selon la revendication 7, dans lequel, dans le cas où le moyen de gestion de visiteurs qui contient l'information de mobile du dispositif de télécommunications mobile n'est pas le moyen de gestion de visiteurs commun, le premier moyen de gestion de mobiles (410) dans lequel le dispositif de télécommunications mobile est localisé envoie un message de réservation au moyen de fourniture d'information (470) lorsqu'il reçoit un message de trajet du moyen de fourniture d'information et fournit un trajet de service en temps réel au moyen de fourniture d'information (470) et au dispositif de télécommunications mobile (480).

15. Procédé de télécommunications sans fil pour un service en temps réel selon la revendication 7, dans lequel, dans le cas où le moyen de gestion de visiteurs qui contient l'information de mobile du dispositif de télécommunications mobile (480) n'est pas le moyen de gestion de visiteurs commun, le moyen de gestion de visiteurs dans lequel le dispositif de télécommunications mobile (480) est localisé envoie un message de changement au premier moyen de gestion de mobiles (410) et demande au premier moyen de gestion de mobiles qu'un trajet soit changé vers un moyen de gestion de visiteurs vers lequel le dispositif de télécommunications mobile (480) va se déplacer.

16. Procédé de télécommunications sans fil pour un service en temps réel selon la revendication 15, dans lequel le message de changement comprend des adresses du dispositif de télécommunications mobile et du moyen de gestion de visiteurs vers lequel le dispositif de télécommunications mobile (480) va se déplacer.
